# EUROPEAN PATENT SPECIFICATION

(11) **EP 3 567 291 B1**
(45) Date of publication and mention of the grant of the patent: **11.12.2024**
(21) Application number: 18171495.7
(22) Date of filing: 09.05.2018
(51) Int. Cl.: F16L 21/03, F16B 1/00, F16J 1/00

(54) **INTEGRATED VIBRO SEAL**
INTEGRIERTE VIBRO-DICHTUNG
JOINT VIBRO INTÉGRÉ

(43) Date of publication of application: 13.11.2019
(73) Proprietor: Secil Kaucuk Sanayi ve Ticaret A.S., Mersin (TR)
(72) Inventor: Cavka, Elvir, 33141 Varnamo (SE)
(74) Representative: Yalçiner Patent and Consulting Ltd.

(56) References cited:
- EP-A2- 1 477 718
- WO-A1-2006/080872
- WO-A1-95/16872
- DE-A1- 10 107 971
- DE-U1- 202013 003 947
- DE-U1- 9 212 665

## Description

### Related Field of the Invention

The present invention is set out in the appended set of claims.

### Background of the Invention (Prior Art)

Sealing element that is used in between the socket and spigot parts of the two corresponding concrete pipes provide a tight sealing by being compressed in between the pipes when they are joint together. To that purpose, the sealing element should be integrated onto the inner surface of the socket part at the time of the pipe production in order to provide a rigid structural integrity. This integration is commonly done by placing the sealing element onto a steel pallet within the concrete pipe mould and then pouring the concrete grout into the mould. When the concrete grout meets the prong type retainer portions of the sealing element a sturdy bond between the pipe and the sealing element is furnished as the sealing element becomes partially moulded onto the inner surface of the socket part. This integration prevents the shifting of the sealing element at the time of the jointing procedure of the two pipes. If it is not prevented, such shifting could cause leaks on the seal and even cracks on the concrete pipes.

Such shifting could also be caused based on human error as the sealing element should be positioned on the steel pallet manually. This is a necessity on the existing systems because none of the existing sealing elements can provide sufficient rigidity to endure and automatic insertion procedure.

To ensure a sturdy bond between the pipe and the sealing element is furnished, a vibration method is used to make the grout fill all the gaps between the concrete and the prong type retainer portions of the sealing element. This vibration creates vulnerability on the positioning of the sealing element. If the sealing elements shift because of the vibration this could cause cracks to form on the joining sections of the sealing element and grout. In order to prevent the shifting of the sealing element during the vibration process an additional support is needed to enhance the structural integrity of the sealing element.

EP1477718A2 discloses two parts structure which are the annular seal and sealing section and the sealing section is placed in to the insertion section of the annular seal wherein the sealing section is made of softer material than the annular seal.

### Brief Description of the Invention

The present invention is set out in the appended set of claims.

The sealing element of the present invention basically consists of two separate sections. The base section, being a rubber material, embodying a horizontal groove in the middle of its body and includes multiple prong type retainer portions at the back wall where it meets the concrete grout in the mould. The support section, being a polymer material, embodying horizontally aligned tubular cavity sections in order to provide the support section with elastomeric physical properties.

As the support section is designed as a separate element from the base section, it can be situated inside the horizontal groove of the base section during pipe production and can be removed afterwards before the jointing of two concrete pipes.

The sealing element of the present invention minimises the losses arising from the occasional detachment of the seal. While support section optimally covers the steel pallet, it also minimises the vibration effect via absorbing the vertical vibrations. It also contributes to the integration of the base section with the concrete pipe and shaft by convenient horizontal oscillation in the concrete grout.

On the other hand, sealing element of the present invention also gains enough structural rigidity, which is provided by the support section, to endure an automatic insertion procedure which would give the present invention the advantage of being positioned on the steel pallet with high precision.-

### Definition of the Figures

In order to explain the present invention in more detail, the following figures have been prepared and attached to the description. The list and the definition of the figures are given below.
**Figure 1** - Sectional view of a first embodiment of the integrated vibro seal
**Figure 2** - Exploded sectional view of a first embodiment of the integrated vibro seal
**Figure 3** - Sectional view of a second embodiment of the integrated vibro seal
**Figure 4** - Exploded sectional view of a second embodiment of the integrated vibro seal
**Figure 5** - Sectional view of a third embodiment of the integrated vibro seal
**Figure 6** - Exploded sectional view of a third embodiment of the integrated vibro seal
**Figure 7** - Sectional view of a fourth embodiment of the integrated vibro seal
**Figure 8** - Exploded sectional view of a fourth embodiment of the integrated vibro seal
**Figure 9** - Sectional view of a fifth embodiment of the integrated vibro seal
**Figure 10** - Exploded sectional view of a fifth embodiment of the integrated vibro seal
**Figure 11** **-** Sectional view of a sixth embodiment of the integrated vibro seal
**Figure 12** - Exploded sectional view of a sixth embodiment of the integrated vibro seal

### Definition of the Elements (Features/Components/Parts) on the Figures

The definition of the features/components/parts which are covered in the figures that are prepared in order to explain the present invention better are separately numbered and given below.
1. Integrated vibro seal
2. Rubber base section
3. Prong type retainer portion
4. Support section
5. Tubular cavity section
6. Support section groove
7. Rubber base section groove
8. Support section prong

### Detailed Description of the Invention

Integrated vibro seal (1) of the present invention is used for sealing wastewater concrete pipes and shafts in relation to each other and it is comprised of;
- A rubber base section (2) embodying a horizontal groove (7) in the middle of its body to receive the support section (4) and is made of a 35-55 IRHD rubber material,
- Multiple prong type retainer portions (3), positioned on the surface of the outer wall of the rubber base section (2) where it meets the concrete grout in the mold, in order to ensure a sturdy bond between the base section (2) and concrete grout and
- A support section (4) embodying horizontally oriented multiple tubular cavity sections (5) and is made of 80-95 IRHD rubber material (5). And wherein

the support section (4) is structured as a separate, removable element from the base section (2) and is situated inside the horizontal groove (7) of the rubber base section (2) and
the groove (7) is formed on the surface of the inner wall of the rubber base section (2) where it doesn't meet the concrete grout in the mold and the support section (4) is made of 80-95 IRHD material and the rubber base section (2) is made of 35-55 IRHD material.

The support section (4) is situated inside the horizontal groove (7) of the rubber base section (2) in order to absorb the vertical vibrations created by the vibration method that is used during the grout pouring of concrete pipe manufacturing. The support section (4) can be removed afterwards before the jointing of two concrete pipes.

Rubber base section (2) is a 35-55 IRHD (International Rubber Hardness Degrees) rubber material while the support section (4) is chosen form 80-95 IRHD rubber material or PP, PVC, PE material or 80-95 IRHD recycled rubber material in order the make the support section (4) rigid enough to endure the automatic seal insertion process on the steel pallet.

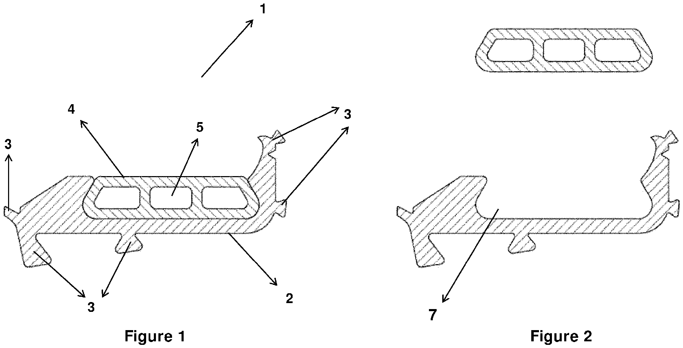

Different embodiments of the integrated vibro seal (1) are shown in figures 1-12.

In figures 1 and 2, a support section (4) including horizontally oriented multiple tubular cavity sections (5) is shown.

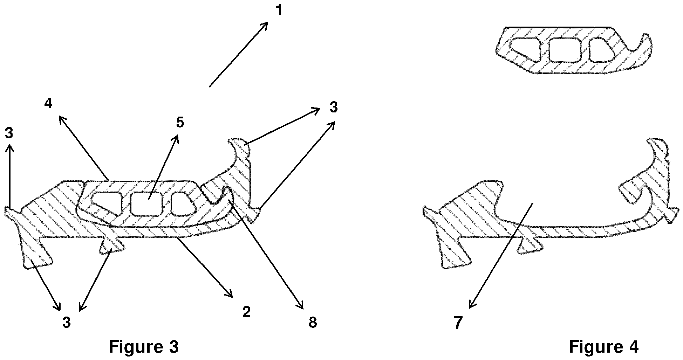

In figures 3 and 4, a support section (4) including horizontally oriented multiple tubular cavity sections (5) and a prong (8) that is used to ensure a sturdy contact between the base section (2) and the support section (4) is shown.

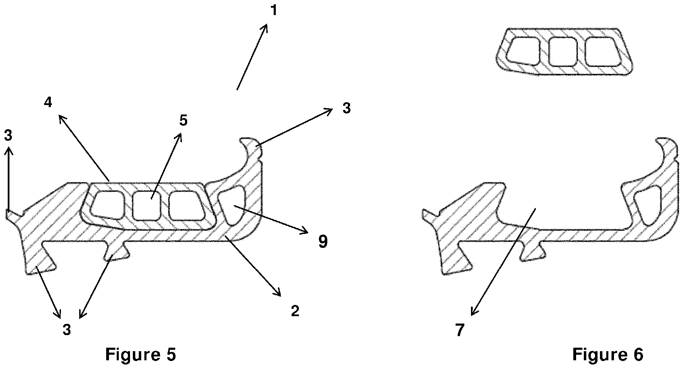

In figures 5 and 6, a support section (4) including horizontally oriented multiple tubular cavity sections (5) and a base section (2) including a horizontally oriented tubular cavity section (5) is shown.

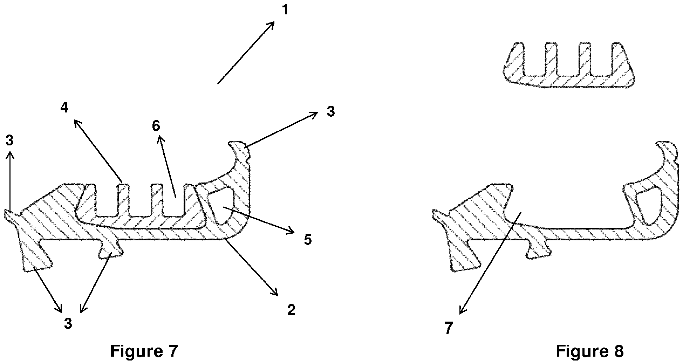

In figures 7 and 8, a base section (2) including a horizontally oriented tubular cavity section (5) and a support section (4) embodying horizontally oriented multiple groove sections (6) is shown.

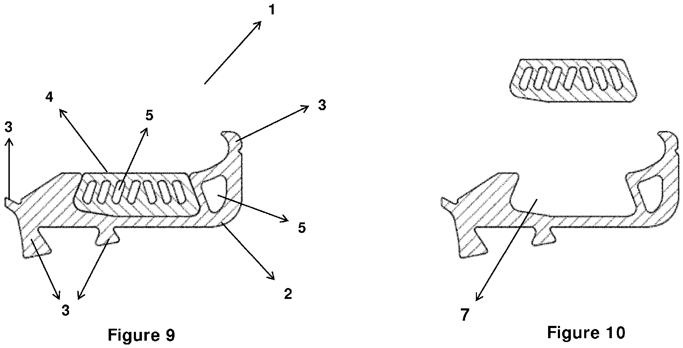

In figures 9 and 10, a base section (2) including a horizontally oriented tubular cavity section (5) and a support section (4) embodying horizontally oriented multiple tubular cavity sections (5) with a narrower section profile is shown.

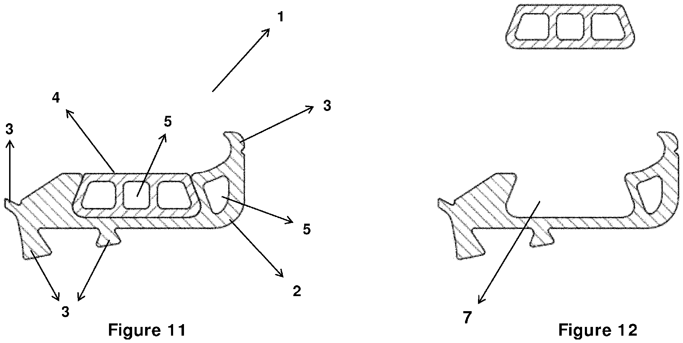

In figures 11 and 12, a base section (2) including a horizontally oriented tubular cavity section (5) and a support section (4) including horizontally oriented multiple tubular cavity sections (5) is shown.

Integrated vibro seal (1) of the present invention that is used in between the socket and spigot parts of the two corresponding concrete pipes provide a tight sealing by being compressed in between the pipes when they are joint together. To that purpose, vibro seal (1) should be integrated onto the inner surface of the socket part at the time of the pipe production in order to provide a rigid structural integrity. This integration is commonly done by placing the vibro seal (1) onto a steel pallet within the concrete pipe mould and then pouring the concrete grout into the mould. When the concrete grout meets the prong type retainer portions (3) of the vibro seal (1) a sturdy bond between the pipe and the vibro seal (1) is furnished as the vibro seal (1) becomes partially moulded onto the inner surface of the socket part. This integration prevents the shifting of the sealing element at the time of the jointing procedure of the two pipes. If it is not prevented, such shifting could cause leaks on the seal and even cracks on the concrete pipes.

To ensure a sturdy bond between the pipe and the vibro seal (1) is furnished, a vibration method is used to make the grout fill all the gaps between the concrete and the prong type retainer portions (3) of the vibro seal (1). This vibration creates vulnerability on the positioning of the vibro seal (1). If the vibro seal (1) shift because of the vibration this could cause cracks to form on the joining sections of the vibro seal (1) and grout. The polymer support section (2) of the vibro seal (1) absorbs the vertical vibrations and prevents the shifting of the vibro seal (1) during the vibration process and provides additional support to enhance the structural integrity of the vibro seal (1).

## Claims

1. Integrated vibro seal (1) for sealing wastewater concrete pipes and shafts in relation to each other is comprised of;
• a rubber base section (2) embodying a groove (7) in the middle of its body to receive a support section (4) and is made of a 35-55 IRHD rubber material,
• multiple prong type retainer portions (3), positioned on the surface of the outer wall of the rubber base section (2) where it meets the concrete grout in the mold, in order to ensure a sturdy bond between the base section (2) and concrete grout and
• the support section (4) embodying multiple tubular cavity sections and is made of 80-95 IRHD rubber material (5)
**characterized in that** the support section (4) is structured as a separate, removable element from the base section (2) and is situated inside the horizontal groove (7) of the rubber base section (2) and
the groove (7) is formed on the surface of the inner wall of the rubber base section (2) where it doesn't meet the concrete grout in the mold and the support section (4) is made of 80-95 IRHD material and the rubber base section (2) is made of 35-55 IRHD material.

2. An integrated vibro seal (1) according to Claim 1, **characterized in that** the support section (4) includes horizontally oriented multiple tubular cavity sections (5).

3. An integrated vibro seal (1) according to Claim 1, **characterized in that** the support section (4) includes a prong (8).

4. An integrated vibro seal (1) according to Claim 1, **characterized in that** the base section (2) includes a horizontally oriented tubular cavity section (5).

5. An integrated vibro seal (1) according to Claim 1, **characterized in that** the support section (4) embodies horizontally oriented multiple groove sections (6).

6. An integrated vibro seal (1) according to Claim 1, **characterized in that** the support section (4) embodies horizontally oriented multiple tubular cavity sections (5) with a narrower section profile.

7. A method for manufacturing wastewater concrete pipes and shafts **characterized by** placing the vibro seal (1) according to the Claim 1, which having a rubber base section (2) embodying a groove (7) in the middle of its body to receive a support section (4) and is made of 35-55 IRHD material and multiple prong type retainer portions (3) positioned on the surface of the outer wall of the rubber base section (2) and the support section (4) having multiple tubular cavity sections (5) and is structured as a separate, removable element from the base section (2) and is made of 80-95 IRHD material, onto a steel pallet within the concrete pipe mould,
pouring the concrete grout into the mould in such a way that the multiple prong type retainer portions (3) meet the concrete grout in the mold, in order to ensure a sturdy bond between the base section (2) and concrete grout,
vibrating during the grout pouring of concrete pipe manufacturing,
separating the support section (4) from the groove (7) before the jointing of concrete pipes.

## Patentansprüche

1. Integrierte Vibro-Dichtung (1) zum Abdichten von Abwasserbetonrohren und -schächten zueinander besteht aus;
• ein Gummibasisabschnitt (2), der eine Nut (7) in der Mitte seines Körpers aufweist, um einen Stützabschnitt (4) aufzunehmen und aus einem 35-55 IRHD-Gummimaterial besteht,
• mehrfach verzweigte Halteabschnitte (3), die auf der Oberfläche der Außenwand des Gummibasisabschnitts (2) positioniert sind, wo er mit dem Vergussmörtel in der Form zusammentrifft, um eine stabile Verbindung zwischen dem Basisabschnitt (2) und dem Vergussmörtel zu gewährleisten und
• der Stützabschnitt (4) verkörpert mehrere röhrenförmige Hohlraumabschnitte und besteht aus 80-95 IRHD-Gummimaterial (5)
**dadurch gekennzeichnet, dass** der Stützabschnitt (4) als separates, vom Basisabschnitt (2) entfernbares Element strukturiert ist und sich innerhalb der horizontalen Nut (7) des Gummibasisabschnitts (2) befindet und
der Nut (7) auf der Oberfläche der Innenwand des Gummibasisabschnitts (2) ausgebildet ist, wo sie nicht auf den Vergussmörtel in der Form trifft, und der Stützabschnitt (4) aus 80-95 IRHD-Material und der Gummibasisabschnitt (2) aus 35-55 IRHD-Material hergestellt ist.

2. Integrierte Vibro-Dichtung (1) nach Anspruch 1, **dadurch gekennzeichnet, dass** der Stützabschnitt (4) mehrere horizontal ausgerichtete rohrförmige Hohlraumabschnitte (5) aufweist.

3. Integrierte Vibro-Dichtung (1) nach Anspruch 1, **dadurch gekennzeichnet, dass** der Stützabschnitt (4) eine Zinke (8) aufweist.

4. Integrierte Vibro-Dichtung (1) nach Anspruch 1, **dadurch gekennzeichnet, dass** der Basisabschnitt (2) einen horizontal ausgerichteten rohrförmigen Hohlraumabschnitt (5) aufweist.

5. Integrierte Vibro-Dichtung (1) nach Anspruch 1, **dadurch gekennzeichnet, dass** der Stützabschnitt (4) horizontal ausgerichtete Mehrfachnutenabschnitte (6) aufweist.

6. Integrierte Vibro-Dichtung (1) nach Anspruch 1, **dadurch gekennzeichnet, dass** der Stützabschnitt (4) horizontal ausgerichtete, mehrfache rohrförmige Hohlraumabschnitte (5) mit einem engeren Querschnittsprofil aufweist.

7. Verfahren zur Herstellung von Abwasserbetonrohren und -schächten, **gekennzeichnet durch** platzieren der Vibro-Dichtung (1) nach Anspruch 1, die einen Gummibasisabschnitt (2) aufweist, der in der Mitte seines Körpers eine Nut (7) zur Aufnahme eines Stützabschnitts (4) ausbildet und aus 35-55 IRHD-Material und mehrzinkigen Halteabschnitten (3) besteht, die auf der Oberfläche der Außenwand des Gummibasisabschnitts (2) positioniert sind, und wobei der Stützabschnitt (4) mehrere rohrförmige Hohlraumabschnitte (5) aufweist und als separates, entfernbares Element von dem Basisabschnitt (2) strukturiert ist und aus 80-95 IRHD-Material besteht, auf eine Stahlpalette innerhalb der Betonrohrform,
gießen des Vergussmörtels in die Form derart, dass die mehrzackigen Halteabschnitte (3) auf den Vergussmörtel in der Form treffen, um eine stabile Verbindung zwischen dem Basisabschnitt (2) und dem Vergussmörtel zu gewährleisten,
vibrationen beim Vergießen des Mörtels bei der Herstellung von Betonrohren,
trennen des Stützabschnitt (4) von der Nut (7) vor dem Verbinden von Betonrohren.

## Revendications

1. Vibro-joint intégré (1) pour l'étanchéité des tuyaux et des puits en béton des eaux usées les uns par rapport aux autres est constitué de;
• une section de base en caoutchouc (2) comprenant une rainure (7) au milieu de son corps pour recevoir une section de support (4) et est faite d'un matériau en caoutchouc 35-55 IRHD,
• des parties de retenue (3) de type à broches multiples, positionnées sur la surface de la paroi extérieure de la section de base en caoutchouc (2) où elle rencontre le coulis de béton dans le moule, afin d'assurer une liaison robuste entre la section de base (2) et le coulis de béton, et
• la section de support (4) comprenant des sections de cavités tubulaires multiples et est faite d'un matériau en caoutchouc 80-95 IRHD (5)
**caractérisé en ce que** la section de support (4) est structurée comme un élément séparé et amovible de la section de base (2) et est située à l'intérieur de la rainure horizontale (7) de la section de base en caoutchouc (2) et
la rainure (7) est formée sur la surface de la paroi intérieure de la section de base en caoutchouc (2) où elle ne rencontre pas le coulis de béton dans le moule et la section de support (4) est faite d'un matériau 80-95 IRHD et la section de base en caoutchouc (2) est faite d'un matériau 35-55 IRHD.

2. Vibro-joint intégré (1) selon la revendication 1, **caractérisé en ce que** la section de support (4) comprend des sections de cavités tubulaires multiples (5) orientées horizontalement.

3. Vibro-joint intégré (1) selon la revendication 1, **caractérisé en ce que** la section de support (4) comprend une broche (8).

4. Vibro-joint intégré (1) selon la revendication 1, **caractérisé en ce que** la section de base (2) comprend une section de cavité tubulaire orientée horizontalement (5).

5. Vibro-joint intégré (1) selon la revendication 1, **caractérisé en ce que** la section de support (4) comporte des sections de rainures multiples (6) orientées horizontalement.

6. Vibro-joint intégré (1) selon la revendication 1, **caractérisé en ce que** la section de support (4) comprend des sections de cavités tubulaires multiples (5) orientées horizontalement avec un profil de section plus étroit.

7. Méthode de fabrication de tuyaux et de puits en béton des eaux usées, **caractérisée par**
placer le vibro-joint (1) selon la revendication 1, qui a une section de base en caoutchouc (2) comprenant une rainure (7) au milieu de son corps pour recevoir une section de support (4) et est faite d'un matériau 35-55 IRHD, des parties de retenue (3) de type à broches multiples positionnées sur la surface de la paroi extérieure de la section de base en caoutchouc (2) et la section de support (4) ayant des sections de cavité tubulaires multiples (5) et est structurée comme un élément séparé et amovible de la section de base (2) et est faite d'un matériau 80-95 IRHD, sur une palette en acier à l'intérieur du moule de tuyau en béton,
couler le coulis de béton dans le moule de manière à ce que les parties de retenue à broches multiples (3) rencontrent le coulis de béton dans le moule, afin d'assurer une liaison robuste entre la section de base (2) et le coulis de béton,
vibrer pendant le coulage du coulis de la fabrication des tuyaux en béton,
séparer la section de support (4) de la rainure (7) avant l'assemblage des tuyaux en béton.
